# FASCICULE DE BREVET EUROPEEN

(11) **EP 3 375 102 B1**
(45) Date de publication et mention de la délivrance du brevet: **05.07.2023**
(21) Numéro de dépôt: 16779155.7
(22) Date de dépôt: 12.10.2016
(51) Int. Cl.: H04B 5/00, G06K 7/10

(54) **ANTENNE DE COMMUNICATION POUR TERMINAL DE PAIEMENT SANS CONTACT**
KOMMUNIKATIONS-ANTENNE FÜR KONTAKTLOSES ZAHLTERMINAL
COMMUNICATION ANTENNA FOR CONTACTLESS PAYMENT TERMINAL

(30) Priorité: 12.10.2015 FR 1559686
(43) Date de publication de la demande: 19.09.2018
(73) Titulaire: Banks and Acquirers International Holding, 75015 Paris (FR)
(72) Inventeur: ALLIROT, Richard, 38700 Corenc (FR); DUBOIS, Eric, 26120 Montvendre (FR); FABREGOULE, Olivier, 07500 Guilherand Granges (FR)
(74) Mandataire: Vidon Brevets & Stratégie
(86) Numéro de dépôt international: PCT/EP2016/074518
(87) Numéro de publication internationale: WO 2017/064149

(56) Documents cités:
- EP-A1- 1 748 515
- US-A1- 2009 170 559
- US-A1- 2014 284 386

## Description

### 1. Domaine de l'invention

L'invention se rapporte au domaine des antennes de communication. L'invention se rapporte plus particulièrement au domaine des antennes de communication en champs proche pour des terminaux de paiement sans contact.

### 2. Art Antérieur

Depuis des années, les systèmes de paiement sans contact se déploient rapidement sur le marché dans le monde. Ces systèmes comprennent des moyens de paiement et des terminaux de paiement munis de la fonctionnalité de communication sans contact. Les moyens de paiement peuvent être des cartes bancaires, des téléphones mobile ou même des porte-clés qui intègrent des antennes et des puces pour réaliser des transactions sans contact. Dans ces systèmes, une technologie d'émission/transmission sans contact est souvent utilisée. Il s'agit par exemple d'une technique de communication en champ proche appelée NFC (de l'anglais pour « *near field communication »*). La communication en champ proche (CCP) est une technologie de communication sans fil à courte portée et haute fréquence. Cette technologie permet d'échanger des données entre deux dispositifs compatibles à une distance maximum de l'ordre de la dizaine de centimètres. Cette technologie est une extension de la norme qui définit les cartes de proximité utilisant la radio-identification (RFID de l'anglais *« radio frequency identification »*), qui combinent l'interface d'une carte à puce et un lecteur au sein d'un seul périphérique.

Le document US 2014/284386 A1 décrit une antenne de communication pour la RFID.

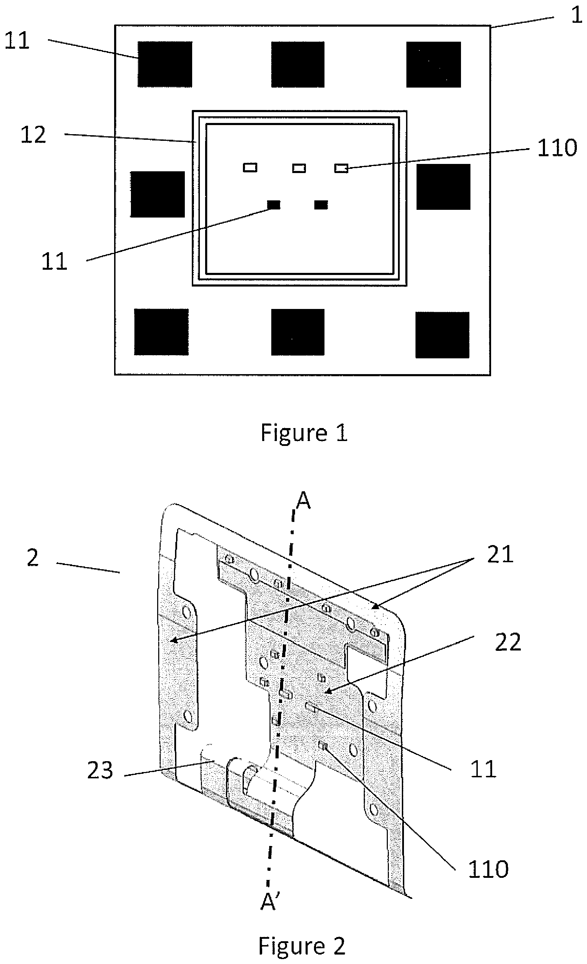

Un exemple de terminal de paiement (dit non supervisé) mettant en oeuvre cette technique de transmission de données comprend souvent un capot avant, une carte électronique 1 et un capot arrière. Comme illustrée en relation avec la figure 1, une antenne de communication 12 en champs proche est fixée sur la carte électronique 1. Un indicateur de paiement sans contact est disposé au centre du capot avant. Des diodes électroluminescentes (LED) 110 sont soudées sur une zone de la carte électronique derrière l'indicateur de paiement sans contact. Un guide lumière est disposé entre les diodes électroluminescentes et l'indicateur afin d'obtenir assez de lumière. L'indicateur peut ainsi être éclairé par ces diodes électroluminescentes 110.

Un tel terminal de paiement sans contact de l'état de la technique présente plusieurs inconvénients. Premièrement, la taille de la carte électronique est relativement grande. Ce qui rend le terminal de paiement plus encombrant. En effet, il est nécessaire de prévoir une zone supplémentaire sur la carte électronique pour monter l'antenne de communication en champs proche et les diodes électroluminescentes (LED). Le coût de fabrication d'un tel terminal de paiement est aussi plus élevé.

Deuxièmement, la performance de l'antenne n'est pas satisfaisante. D'une part, les composants électroniques et les circuits imprimés sur la carte électronique produisent des perturbations importantes pour l'antenne de communication; d'autre part, l'antenne ne peut pas être placée suffisamment proche du capot avant, car les composants électroniques sur la carte électronique ont des dimensions trop importantes au regard de l'antenne de communication. Même si ces composants électroniques sont plaqués contre la surface intérieure du capot avant, il y a encore une distance qui ne peut pas être négligée, entre l'antenne est le capot avant. En effet, pour les communications en champs proches, l'atténuation des signaux est importante même pour une distance très courte.

Troisièmement, le terminal de paiement est moins résistant à des impacts mécaniques externes et ne peut pas passer les tests exigeants avec succès conformément aux normes européennes (par exemple, la norme européen EN 62262). En effet, afin d'améliorer la performance de l'antenne, la distance entre l'antenne et le capot doit être réduite autant que possible. Ainsi, la carte électronique est placée juste dernière le capot avant du terminal de paiement. Les composants électroniques y compris les diodes électroluminescentes sont plaqués contre la surface arrière du capot avant. Lorsqu'un choc mécanique a lieu sur le capot avant, les composants électroniques sur la carte électronique sont susceptibles d'être endommagés par l'énergie transmise par le capot avant.

Il est donc nécessaire de disposer d'un nouveau terminal de paiement sans contact qui puisse permettre de résoudre ces problématiques de l'art antérieur.

### 3. Résumé

La technique proposée ne présente pas ces problèmes de l'art antérieur. Plus particulièrement, la technique proposée se rapporte à un terminal de paiement sans surveillance (également appelé terminal autonome ou terminal non supervisé) dans lequel l'antenne sans contact est formée d'un matériau souple.

Un tel matériau souple permet d'une part de conformer l'antenne de manière plus aisée et d'autre part d'offrir une résistance accrue aux chocs. Par ailleurs, la conformation de l'antenne permet de résoudre un problème de compacité du terminal autonome.

L'invention est définie par la revendication indépendante. Des modes de réalisation sont décrits dans les revendications dépendantes.

Ainsi, l'invention se rapporte à une antenne de communication selon la revendication 1 comprenant une première zone d'émission et de réception de signaux et une deuxième zone d'accueil de composants électroniques, ladite première zone étant située dans un premier plan, dit plan de niveau supérieur, ladite deuxième zone étant située dans un deuxième plan, dit plan de niveau inférieur, ledit plan de niveau inférieur étant sensiblement parallèle audit plan de niveau supérieur.

Ainsi, une telle antenne permet concevoir des terminaux plus compacts et plus résistants.

L'antenne est formée d'un circuit imprimé flexible. Ainsi, l'antenne peut être disposée plus simplement au sein d'un terminal de paiement.

Ladite antenne est conformée pour effectuer une communication en champs proche.

Ainsi, la création d'un terminal de paiement autonome est plus simple.

Selon une caractéristique particulière, que ledit plan de niveau inférieur est en retrait d'environ 6 millimètres par rapport audit plan de niveau supérieur.

Ainsi, l'antenne est en mesure de se déformer au cours de son utilisation.

Selon un mode de réalisation particulier, les composants électroniques pouvant être accueillis sur ladite deuxième zone comprennent au moins une diode électroluminescente (LED).

Ainsi, le centre de l'antenne est en mesure d'être éclairé.

Selon un mode de réalisation particulier, ladite antenne comprend une mousse de maintien, ladite mousse de maintien étant disposée entre ledit plan de niveau supérieur et ledit plan de niveau inférieur pour tenir ladite deuxième zone dans ledit plan de niveau inférieur.

Ainsi, la déformation de la première zone peut être absorbée par la mousse de maintien, évitant ainsi que cette déformation ne soit propagée à la deuxième zone, par exemple en cas de choc ou d'impact.

Selon une caractéristique particulière, ladite mousse de maintien comprend une première ouverture pratiquée au-dessus des composants électroniques sur ladite deuxième zone.

Ainsi, les composants électroniques, qui peuvent par exemple être des diodes électroluminescentes, ne sont pas masqués par la mousse de maintien, évitant par la même une éventuelle dégradation de ces composants électroniques.

Selon une autre aspect, l'invention se rapporte également à un terminal de paiement sans contact comprenant un capot avant et une carte électronique. Un tel terminal comprend une antenne de communication telle que présentée précédemment, ladite antenne étant disposée entre ledit capot avant et ladite carte électronique.

Selon une caractéristique particulière la première zone de ladite antenne est montée sur une surface intérieure dudit capot avant. Ainsi, l'émission et la réception de données en champ proche n'est pas perturbée ou inhibée par une distance excessive par rapport au capot ou bien par la présence de composant électroniques perturbateurs.

Selon une caractéristique particulière, ledit capot avant comprend un indicateur de paiement sans contact, ladite deuxième zone de ladite antenne étant disposée au moins partiellement à l'aplomb dudit indicateur.

Selon un mode de réalisation particulier, ledit indicateur est apte à être éclairé par des diodes électroluminescentes disposées sur ladite deuxième zone de ladite antenne.

Selon un autre aspect, l'invention se rapporte également à un procédé de formation d'une antenne, telle que décrite précédemment. Un tel procédé met en oeuvre une découpe d'un circuit imprimé flexible préalablement conçu, puis au moins une étape de conformation du circuit imprimé flexible découpé de sorte à former une antenne souple comprenant au moins deux plan sensiblement parallèles.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 illustre une carte électronique d'un terminal de paiement sans contact de l'état de la technique ;
- la figure 2 illustre la structure d'une antenne selon la technique proposée;
- la figure 3 est une vue en coupe de l'antenne de la Figure 2;
- la figure 4 illustre une antenne semi-manufacturée selon la technique proposée;
- la figure 5 illustre le mode de réalisation spécifique de l'antenne selon la technique proposée;
- la figure 6 est une vue en coupe de l'antenne de la figure 5 ;
- la figure 7 est une vue éclatée d'un terminal de paiement sans contact selon la technique proposée.

### 5. Description détaillée

Dans l'objectif de résoudre les problèmes techniques relatifs à la compacité, à la performance des antennes et à la résistance de chocs des terminaux de paiement sans contact de l'état de la technique, les inventeurs ont identifié, par le biais de l'antenne de de communications en champs proche, une technique permettant de résoudre au moins certains de ces problèmes. Différents modes de réalisation de l'antenne et du terminal de paiement sont présentés en relation avec les figures 2 à 7.

Le principe général de la technique proposée est de réaliser une antenne architecturée sur deux niveaux (deux plans) sensiblement parallèles : le premier niveau définit une première zone de l'antenne, dite zone d'émission/réception. Cette première zone est celle qui émet et reçoit les signaux en champs proches (sans contact). La deuxième zone est décalée, en profondeur, par rapport à la première zone. Cette deuxième zone est ainsi éloignée de la surface externe du terminal de paiement (i.e. la surface qui est soumise aux éventuels impacts et dégradation subis par le terminal de paiement). Cette architecture permet de concevoir un terminal de paiement sans contact qui d'une part est plus compact et d'autre part résiste mieux aux chocs et aux dégradations subis. En effet, le fait de disposer d'une antenne à deux niveaux permet de réduire sensiblement la taille de la carte électronique à laquelle cette antenne est connectée et par voie de conséquence de réduire la taille du terminal de paiement.

Ainsi, d'une manière générale on divulgue une nouvelle antenne 2 de communication (illustrée en relation avec la figure 2), comprenant deux zones 21, 22 qui sont situées respectivement sur deux plans sensiblement parallèles de niveaux différents. Plus précisément, l'antenne 2 comprend une première zone 21 pour émettre et recevoir des signaux, dite zone d'émission/réception, et une deuxième zone 22 pour recevoir des composants électroniques 11, 110. La première zone 21 est située dans un premier plan, dit plan de niveau supérieur, et la deuxième zone 22 est située dans un deuxième plan, dit plan de niveau inférieur. Le plan de niveau inférieur est parallèle audit plan de niveau supérieur.

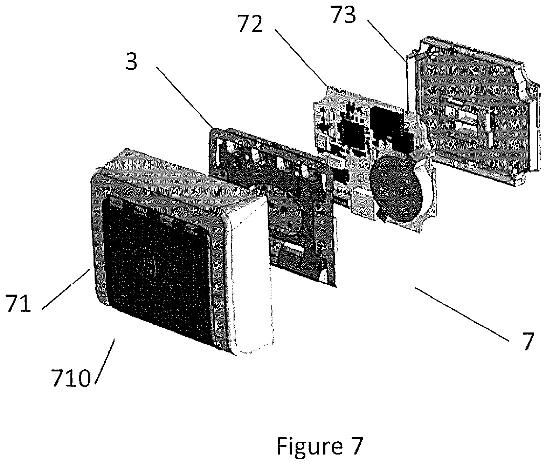

La première zone 21 de l'antenne 2 de communication, qui est située au plan de niveau supérieur, peut être directement collée sur la surface intérieure d'un capot avant 71 d'un terminal de paiement sans contact 7 (illustré en relation avec la figure 7) : ceci permet de minimiser la distance entre l'antenne 2 et des moyens de paiement sans contact passant devant le capot avant 71 du terminal de paiement 7. L'atténuation des signaux est réduite avec la diminution de la distance, et l'intensité des signaux est ainsi garantie. Par ailleurs, l'antenne 2 ne fait plus partie de la carte électronique 72 du terminal de paiement 7 (comme exposé en figure 1). Les perturbations électromagnétiques produites par des composants électroniques 11 de la carte électroniques 72 ont moins d'impact sur l'antenne 2 de communication. Les performances de l'antenne 2 augmentent, car elle se trouve éloignée de la carte électronique 72 qui est l'une des sources des perturbations. En outre, comme la carte électronique 72 ne comprend plus d'antenne imprimée 12, il n'est plus nécessaire de plaquer la carte électronique 72 contre le capot avant 71 du terminal de paiement 7 pour minimiser la distance entre l'antenne 12 et le capot avant. La carte électronique 72 peut être ainsi placée dernière l'antenne 2 de communication. Par conséquent, des chocs sur le capot avant 71 du terminal de paiement 7 ont beaucoup moins d'impacts sur les composants électroniques sur la carte électronique 72. En d'autres termes, la modification de la forme et des composants de l'antenne permet de modifier en conséquence l'architecture du terminal de paiement : en plaçant la zone d'émission/réception 21 proche du capot avant du terminal de paiement, on assure une meilleure réception des signaux en provenance des dispositifs sans contact (cartes de paiement, téléphones intelligents) tout en limitant les risques pour le terminal de paiement sans contact, car comme cela est précisé par la suite, la deuxième zone de l'antenne est au contraire éloignée de la surface du capot avant du terminal de paiement.

En effet, la deuxième zone 22 de l'antenne 2, qui est située au plan de niveau inférieur, peut recevoir des composants électroniques 11, 110. Il est ainsi possible de déplacer un certain nombre de composants électroniques 11, 110 de la carte électronique à cette deuxième zone 22 de l'antenne 2 : plus spécifiquement, les composants électroniques déplacés sont par exemple les LED (diodes électroluminescentes) servant à indiquer à l'utilisateur l'emplacement sur lequel le dispositif sans contact doit être apposé. La surface initialement prévue sur la carte électronique 72 pour ces composants électroniques 11, 110 peut par conséquent être économisée. La taille de la carte électronique 72 résultante, selon l'invention, et la taille du terminal de paiement 7 résultant peuvent ainsi être réduites. Par ailleurs, la deuxième zone 22 est située au plan de niveau inférieur par rapport au plan où se situe la première zone 21 de l'antenne 2 (zone d'émission/réception). Ainsi, les composants électroniques 11, 110 montés sur la deuxième zone 22 de l'antenne 2 sont relativement éloignés du capot avant 71 du terminal de paiement. Les chocs sur le capot avant 71 ont ainsi moins (voire pas du tout) d'impact sur ces composants électroniques 11, 110. Comme explicité précédemment, ces composants électroniques montés sur la deuxième zone 21 de l'antenne 2 peuvent comprendre au moins une diode électroluminescente (LED) 110 disposée derrière un indicateur de paiement sans contact sur le capot avant du terminal de paiement. Cet indicateur peut ainsi être éclairé par les diodes électroluminescentes 110. Les indicateurs du paiement sans contact se trouvent souvent dans une zone au centre des capots avant 71 des terminaux de paiement sans contact. En conséquence, la deuxième zone 22 de l'antenne 2 est située au centre de l'antenne 2, et la première zone 21 est située au niveau d'une zone périphérique de l'antenne 2.

Selon la technique proposée l'antenne 2 comprend en outre une troisième zone 23, dite zone de connexion, qui permet à l'antenne 2 de se connecter à la carte électronique 72 du terminal de paiement 7. Sur cette zone de connexion 23, convergent des pistes pour l'émission et la réception de signaux et des pistes de connexion des composants électroniques 11, 110 montés sur la deuxième zone 22 de l'antenne 2. En particulier, ces pistes de connexion comprennent des pistes pour alimenter et contrôler les diodes électroluminescentes 110.

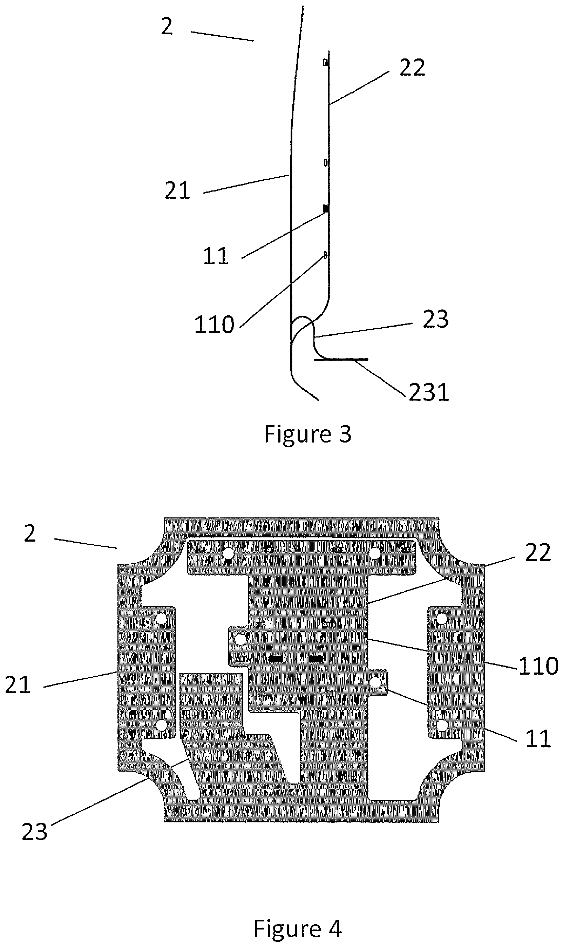

La figure 3 est une vue en coupe de l'antenne 2 de la technique proposée suivant l'axe A-A' illustré dans la figure 2. On peut constater que la première zone 21 et la deuxième zone de 22 de l'antenne 2 se situent généralement sur deux plans différents. Ces deux plans sont sensiblement parallèles entre eux. La zone de connexion 23 s'étend vers l'arrière de l'antenne. Elle comprend un connecteur 231 qui peut être inséré dans un connecteur femelle soudé sur la carte électronique 72 du terminal de paiement 7.

La figure 4 illustre une antenne semi-manufacturée (c'est à dire avant qu'elle ne soit conformée selon la présente technique, en deux plans parallèles et une plage de connexion) selon la technique proposée. Cette antenne semi-manufacturée comprend une première zone 21 située au niveau d'une zone périphérique, une deuxième zone 22 située au centre de l'antenne est une troisième zone 23 s'étendant de la première zone 21. Toutes les trois zones 21, 22, 23 de l'antenne semi-manufacturée sont situées sur le même plan.

De préférence, et très avantageusement, l'antenne est fabriquée à partir d'un circuit imprimé flexible par exemple de base en polyimide (PI) ou en polyester (PET). L'antenne 2 selon la technique proposée peut ainsi être obtenue par une étape de découpage d'un circuit imprimé flexible, délivrant une antenne semi-manufacturée (circuit imprimé flexible coupé), et une étape de formage (conformage) de l'antenne semi-manufacturée.

Cette méthode de fabrication offre en premier lieu l'avantage de ne pas gaspiller inutilement le circuit imprimé flexible. La première zone 21 a pour fonction de l'antenne sans contact (émission et réception des signaux) et comprend deux boucles de cuivres et une résistance de « strap ». Des diodes électroluminescentes 110 (LED) montées sur la deuxième zone 22 peuvent comprendre des diodes électroluminescentes pour indiquer la progression d'une transaction et/ou des diodes électroluminescentes pour éclairer un logo sans contact (« contactless ») sur le capot avant 71 d'un terminal de paiement 7 sans contact. En deuxième lieu, cette méthode de fabrication permet de monter les composants électroniques sur le circuit imprimé flexible de manière simple et efficace. Il n'est en effet pas nécessaire de conformer l'antenne pour monter les composants électroniques (les LED par exemple) sur l'antenne. Cette étape de montage peut se faire à plat, ce qui est bien plus rapide et efficace.

Par ailleurs, à la différence l'état de la technique, l'antenne 2 selon la technique proposée réutilise la surface de la zone centrale du circuit imprimé flexible : or on sait que le prix d'un circuit imprimé flexible dépende de sa surface avant découpage ; dès lors toute zone découpée est une zone payée mais non utilisée ; le principe de modèle de l'antenne tel que proposée ne présente pas cet inconvénient et est économiquement intéressant. De plus, la surface de la carte électronique est réduite, car des composants électroniques (e.g. les diodes électroluminescentes 110) sont déplacés à la deuxième zone de l'antenne.

En effet, dans le cas d'un terminal de paiement compact usuel, les diodes électroluminescentes occupent une place qui pourrait être utile pour les autres composants électroniques. Ceci oblige souvent à ajouter une carte complémentaire qui rend le terminal de paiement plus cher et plus encombrant. En outre, la présence des diodes électroluminescentes 110 sur la deuxième zone 22 de l'antenne 2 ne nécessite pas l'adjonction de guide lumière, comme dans l'état de la technique. En effet, avec des diodes électroluminescentes sur la carte électronique comme sur les terminaux de paiement de l'état de la technique, la présence d'un guide lumière est indispensable pour obtenir suffisamment de lumière sur le capot avant du terminal de paiement. Ceci n'est pas le cas du terminal de la présente technique : en effet, l'antenne 2 proposée permet également de réduire le coût de fabrication des terminaux de paiement.

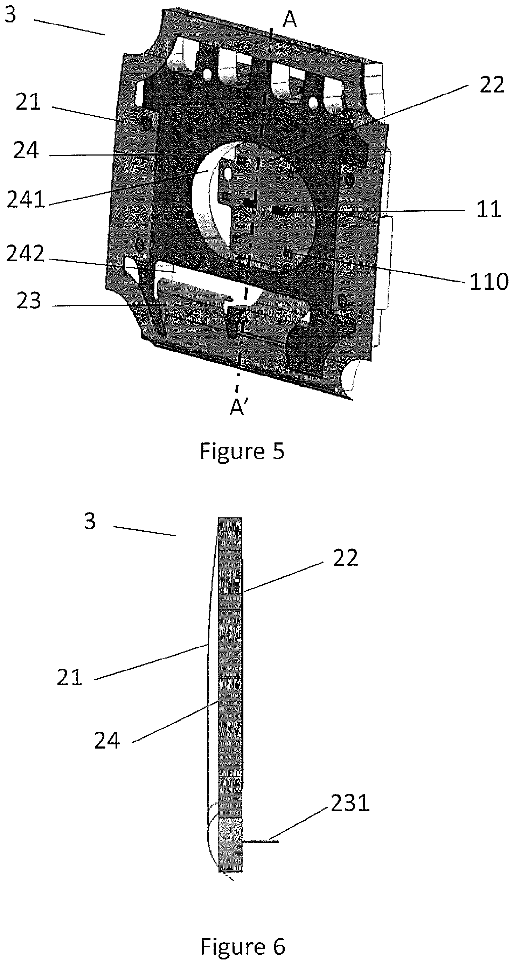

La figure 5 illustre une antenne 3 de communication selon un mode de réalisation spécifique de la technique proposée. La figure 6 est une vue en coupe de l'antenne de la figure 5 selon l'axe A-A'. L'antenne 3 selon ce mode de réalisation comprend une première zone 21 située dans un premier plan (plan de niveau supérieur), une deuxième zone 22 située dans un deuxième plan (plan de niveau inférieur), une troisième zone 23 (zone de connexion). En particulier, cette antenne 3 comprend une mousse de maintien 24 disposée entre le plan de niveau supérieur et ledit plan de niveau inférieur pour maintenir la deuxième zone 22 dans le plan de niveau inférieur. La taille de la mousse de maintien 24 est sensiblement identique à celle de l'antenne 3. La mousse de maintien comprend par exemple une portion plus ou moins significative constituée de mousse polyuréthane. La mousse de maintien 24 comprend une première ouverture 241 dans une zone centrale qui correspond aux emplacements des diodes électroluminescentes 110 montées sur la deuxième zone 22 de l'antenne 3. Cette première ouverture 241 permet de laisser passer la lumière émise par les diodes électroluminescentes 110, sans nécessiter obligatoirement l'utilisation de guide lumière spécifique. Éventuellement, les parois internes de la première ouverture peuvent être optionnellement plaquées d'une couche réflectrice pour guider la lumière.

La mousse de maintien 24 peut aussi comprendre une deuxième ouverture 242 dans une zone correspondant à la zone de connexion 23 de l'antenne 3. Le connecteur 231 de la zone de connexion 23 peut traverser la mousse de maintien 24 par cette deuxième ouverture 242 afin d'être inséré dans un connecteur femelle disposé sur une carte électronique 72 derrière l'antenne 3. La zone périphérique de la mousse de maintien 24 entre en contact avec la première zone 21 de l'antenne 3, et les portions autour de la première ouverture de la mousse entrent en contact avec la deuxième zone 22 de l'antenne afin de tenir la deuxième zone 22 dans le plan de niveau inférieur. De préférence, le plan de niveau inférieur est en retrait de 6 millimètres par rapport au plan de niveau supérieur. L'épaisseur préférentielle de la mousse de maintien est ainsi de l'ordre de 6 millimètres.

L'intérêt d'utiliser une mousse de maintien entre la première zone et la deuxième zone est double : d'une part cette mousse de maintien permet de conserver une distance constante entre la première zone et la deuxième zone sans utilisation de matière onéreuse et sans utilisation d'une armature en matière plastique ; d'autre part cette mousse offre l'avantage d'absorber les chocs de manière simple et optimale. En effet, lorsque le terminal subit un impact ou une dégradation, la mousse est conformée pour absorber le choc résultant, empêchant ainsi d'une part une dégradation de la carte électronique et d'autre part une casse brutale de la face avant. Ainsi, le terminal de la présente technique est plus souple et plus résistant que les terminaux de l'art antérieur.

La figure 7 est une vue éclatée d'un terminal de paiement sans contact selon la technique proposée. Ce terminal de paiement 7 sans contact comprend un capot avant 71, une antenne 3 de communication selon la technique proposée, une carte électronique 72 et un capot arrière 73. Le capot avant 71 comprend un logo 710 de paiement sans contact au centre d'une surface extérieure. Ce logo remplit la fonction d'un indicateur permettant indiquer la zone d'induction du terminal de paiement sans contact. Un utilisateur peut faire passer ses moyens de paiement sans contact devant le logo 710 du terminal de paiement sans contact afin de réaliser une transaction. Le logo 710 est au moins partiellement transparent et apte à être éclairée par des diodes électroluminescentes 110 montées sur la deuxième zone 22 de l'antenne 3.

La première zone 21 de l'antenne est montée dernière le capot avant 71 du terminal de paiement 7. Elle est maintenue plaquée contre la surface intérieure du capot avant 71 par des adhésifs pour obtenir les meilleures performances tout en assurant la reproductibilité du montage. Ce montage permet de minimiser l'espace entre l'antenne 3 et le capot avant 71. La deuxième zone 22 de l'antenne 3 reste dans un plan de niveau inférieur qui est en retrait de 6 millimètres par rapport au plan de niveau supérieur où se situe la première zone 21, grâce à mousse de maintien 24. La carte électronique 72 est placée dernière l'antenne 3. L'antenne 3 et la carte électronique 72 sont fixées dans un boîtier formé par le capot avant 71 et le capot arrière 73.

Comme explicité précédemment, sous l'action humaine ou celle de machines, les terminaux de paiement 7 sans contact peuvent subir des chocs et être endommagés. L'indice de protection *IK* détermine le degré de protection du matériel électrique, à travers sa résistance aux chocs d'origine mécanique externes (norme européenne EN 62262). L'indice de protection IK s'échelonne selon des niveaux de protection allant de 1 à 10, en fonction du poids reçu et de la hauteur d'où a lieu la chute.

Lorsque l'on teste le niveau de protection des terminaux de paiement de la technique proposée selon l'indice *IK10,* il est mesuré qu'une déformation du capot avant du terminal de paiement est inférieure à 6 millimètres. La partie entre la première zone 21 et la deuxième zone 22 de l'antenne, occupée par la mousse de maintien, va alors se comprimer sans transmettre l'énergie brutalement aux composants électroniques derrière la mousse de maintien 24. Pour les diodes électroluminescentes montées sur la deuxième zone 22 de l'antenne 3, aucune énergie n'y est transmise. En effet, ces diodes électroluminescentes n'entreront pas en contact avec la mousse de maintien 24, grâce à la première ouverture 241 de la mousse de maintien 24. En outre, elles n'entreront pas non plus en contact avec le capot avant, car la déformation maximale du capot avant est de 6 millimètre qui est inférieure à la distance gardée entre la deuxième zone 22 de l'antenne est la première zone 21.

Les exemples de réalisation exposés précédemment ne le sont bien évidemment qu'à titre indicatif. L'homme du métier est en mesure de comprendre les avantages procurés par la présente technique et notamment les avantages procurés par l'utilisation d'une antenne souple, disposée sur deux niveaux différents eux-mêmes séparés par une mousse absorbant les chocs. Il est clair qu'une telle antenne peut être utilisée dans d'autres arrangements et d'autres dispositifs sans sortir du cadre de la présente technique.

## Revendications

1. Antenne de communication formée d'un circuit imprimé flexible, ledit circuit imprimé comprenant au moins une première zone d'émission et de réception de signaux en champs proche (21), ladite première zone constituant une zone périphérique de ladite antenne et comprenant au moins une spire, une deuxième zone (22) d'accueil de composants électroniques située au centre de ladite antenne et une troisième zone (23), dite zone de connexion, qui permet à l'antenne de se connecter à une carte électronique, **caractérisée en ce que** :
- dans une première configuration, dite semi-manufacturée, ladite première zone, ladite deuxième zone et ladite troisième zone (23) constituant ladite antenne de communication sont situées dans un même plan,
dans une deuxième configuration, dite conformée, ladite première zone se situe dans un premier plan, dit plan de niveau supérieur, ladite deuxième zone se situe dans un deuxième plan, dit plan de niveau inférieur, ledit plan de niveau inférieur étant sensiblement parallèle audit plan de niveau supérieur.

2. Antenne selon la revendication 1, **caractérisée en ce que** ledit plan de niveau inférieur est en retrait d'environ 6 millimètres par rapport audit plan de niveau supérieur.

3. Antenne selon la revendication 1, **caractérisée en ce que** les composants électroniques pouvant être accueillis sur ladite deuxième zone comprennent au moins une diode électroluminescente (LED).

4. Antenne selon la revendication 1, **caractérisée en ce qu'**elle comprend une mousse de maintien, ladite mousse de maintien étant disposée entre ledit plan de niveau supérieur et ledit plan de niveau inférieur pourtenir ladite deuxième zone dans ledit plan de niveau inférieur.

5. Antenne selon la revendication 4, **caractérisé en ce que** ladite mousse de maintien comprend une première ouverture pratiquée au-dessus des composants électroniques sur ladite deuxième zone.

6. Terminal de paiement sans contact comprenant un capot avant et une carte électronique, **caractérisé en ce qu'**il comprend une antenne de communication selon une quelconque des revendications 1 à 5, disposée entre ledit capot avant et ladite carte électronique.

7. Terminal de paiement sans contact selon la revendication 6, **caractérisé en ce que** ladite première zone de ladite antenne étant montée sur une surface intérieure dudit capot avant.

8. Terminal de paiement sans contact selon la revendication 7, **caractérisé en ce que** ledit capot avant comprend un indicateur de paiement sans contact, ladite deuxième zone de ladite antenne étant disposée au moins partiellement à l'aplomb dudit indicateur.

9. Terminal de paiement sans contact selon la revendication 8, **caractérisé en ce que** ledit indicateur est apte à être éclairé par des diodes électroluminescentes disposées sur ladite deuxième zone de ladite antenne.

## Patentansprüche

1. Kommunikationsantenne, die aus einer flexiblen Leiterplatte gebildet ist, wobei die Leiterplatte mindestens einen ersten Bereich zum Senden und Empfangen von Signalen im Nahfeld (21) aufweist, wobei der erste Bereich einen peripheren Bereich der Antenne bildet und mindestens eine Windung aufweist, einen zweiten Bereich (22) zum Aufnehmen elektronischer Komponenten, der sich in der Mitte der Antenne befindet, und einen dritten Bereich (23), den Verbindungsbereich, aufweist, der es der Antenne ermöglicht, sich mit einer elektronischen Karte zu verbinden, **dadurch gekennzeichnet, dass**:
- sich in einer ersten, halbfertigen Konfiguration der erste Bereich, der zweite Bereich und der dritte Bereich (23), die die Kommunikationsantenne bilden, in derselben Ebene befinden,
sich in einer zweiten, ausgebildeten Konfiguration der erste Bereich in einer ersten Ebene, der oberen Ebene, befindet, der zweite Bereich in einer zweiten Ebene, der unteren Ebene, befindet, wobei die untere Ebene im Wesentlichen parallel zu der oberen Ebene ist.

2. Antenne nach Anspruch 1, **dadurch gekennzeichnet, dass** die untere Ebene um etwa 6 mm in Bezug auf die obere Ebene zurückversetzt ist.

3. Antenne nach Anspruch 1, **dadurch gekennzeichnet, dass** die elektronischen Komponenten, die auf dem zweiten Bereich aufgenommen werden können, mindestens eine eine lichtemittierende Diode (LED) aufweisen.

4. Antenne nach Anspruch 1, **dadurch gekennzeichnet, dass** sie einen Stützschaum aufweist, wobei der Stützschaum zwischen der oberen Ebene und der unteren Ebene angeordnet ist, um den zweiten Bereich in der unteren Ebene zu halten.

5. Antenne nach Anspruch 4, **dadurch gekennzeichnet, dass** der Stützschaum eine erste Öffnung aufweist, die über den elektronischen Komponenten in dem zweiten Bereich gebildet ist.

6. Kontaktloses Zahlungsterminal, umfassend eine vordere Abdeckung und eine elektronische Karte, **dadurch gekennzeichnet, dass** es eine Kommunikationsantenne nach einem der Ansprüche 1 bis 5 aufweist, die zwischen der vorderen Abdeckung und der elektronischen Karte angeordnet ist.

7. Kontaktloses Zahlungsterminal nach Anspruch 6, **dadurch gekennzeichnet, dass** der erste Bereich der Antenne auf einer Innenfläche der vorderen Abdeckung befestigt ist.

8. Kontaktloses Zahlungsterminal nach Anspruch 7, **dadurch gekennzeichnet, dass** die vordere Abdeckung eine Anzeige für kontaktloses Zahlen aufweist, wobei der zweite Bereich der Antenne mindestens teilweise senkrecht zur Anzeige angeordnet ist.

9. Kontaktloses Zahlungsterminal nach Anspruch 8, **dadurch gekennzeichnet, dass** die Anzeige geeignet ist, durch Leuchtdioden beleuchtet zu werden, die auf dem zweiten Bereich der Antenne angeordnet sind.

## Claims

1. Communications antenna formed by a flexible printed circuit board, said printed circuit board comprising at least a first zone for sending and receiving signals in the near-field (21), said first zone forming a peripheral zone of the antenna and comprising at least one turn, a second zone (22) for receiving electronic components, located in the center of the antenna, and a third zone (23), called connection area, allowing the antenna to connect to an electronic board, **characterized in that**:
- in a first configuration, called semi-formed configuration, the first zone, the second zone and the third zone (23) forming the communication antenna are in the same plane,
in a second configuration, called formed configuration, the first zone is located in a first plane, named a higher-level plane, the second zone is located in a second plane, called a lower-level plane, the lower-level plane being substantially parallel to the higher-level plane.

2. Antenna according to claim 1, **characterized in that** said lower-level plane is recessed by about 6 mm relative to said higher-level plane.

3. Antenna according to claim 1, **characterized in that** the electronic components that can be received on said second zone comprise at least one light-emitting diode (LED).

4. Antenna according to claim 1, **characterized in that** it comprises a holding foam, said holding foam being placed between said higher-level plane and said lower-level plane to hold said second zone in said lower-level plane.

5. Antenna according to claim 4, **characterized in that** said holding foam comprises a first aperture made above the electronic components on said second zone.

6. Contactless payment terminal comprising a front cover and an electronic board, **characterized in that** it comprises a communications antenna according to any one of the claims 1 to 5, disposed between said front cover and said electronic board.

7. Contactless payment terminal according to claim 6, **characterized in that** said first zone of said antenna is mounted on an inner surface of said front cover.

8. Contactless payment terminal according to claim 7, **characterized in that** said front cover comprises a contactless payment indicator, said second zone of said antenna being at least partially placed directly over said indicator.

9. Contactless payment terminal according to claim 8, **characterized in that** said indicator is capable of being illuminated by light-emitting diodes disposed on said second zone of said antenna.
